# FASCICULE DE BREVET EUROPEEN

(11) **EP 0 558 864 B1**
(45) Date de publication et mention de la délivrance du brevet: **15.05.1996**
(21) Numéro de dépôt: 92420465.4
(22) Date de dépôt: 17.12.1992
(51) Int. Cl.: A23C 19/14, A01J 27/00

(54) **Procédé de fumage et de formage simultané d'un fromage**
Verfahren zum gleichzeitigen Räuchern und Formen von Käse
Process for simultaneously smoking and forming cheese

(30) Priorité: 31.12.1991 FR 9116481
(43) Date de publication de la demande: 08.09.1993
(73) Titulaire: Le Gleour, Jean, F-74230 Thones (FR)
(72) Inventeur: Le Gleour, Jean, F-74230 Thones (FR)
(74) Mandataire: Moinas, Michel

(56) Documents cités:
- FR-A- 1 008 865
- FR-A- 1 466 343
- FR-A- 2 464 654
- FR-A- 2 655 516
- US-A- 2 727 823
- FOOD SCIENCE AND TECHNOLOGY ABSTRACTS 1991, AN NO 80-09-P1564 , INT. FOOD INFORMATION SERVICE & MILCHFORSCHUNG-MILCHPRAXIS vol.21, no.4, 1979, page 89, W.Kongehl 'Elstergold-Edammer zart gerauchert - ein gefragtes Delikaterzeugnis'
- FOOD SCIENCE AND TECHNOLOGY ABSTRACTS 1974, AN NO 74-11-P1639 , INT. FOOD INFORMATION SERVICE & PRZEGLAD MLECZARSKI vol.23, no.6, 1974, pages 6-7 J.Gagalo 'gryficki cheese'

## Description

La présente invention se rapporte à un procédé permettant de fumer et de former simultanément un fromage, ainsi qu'aux fromages obtenus par ce procédé.

L'aspect extérieur d'un fromage ne semble relever a priori que de critères purement esthétiques ; cependant, comme chacun le sait, il existe d'innombrables variétés de fromages et la forme particulière qu'on va donner à l'un d'entre eux va dès lors servir de critères de distinction et de reconnaissance.

Il n'est pas rare par exemple que, dans un rayon de supermarché, plusieurs dizaines de variétés soient proposées aux consommateurs, parfois pressés, et la forme caractéristique du produit lui permettra de faire son choix plus rapidement.

Le fumage d'un fromage ne correspond bien évidemment pas à des critères esthétiques, mais gustatifs. Par exemple, plusieurs fabricants proposent généralement comme fromages-apéritifs, des fromages fumés en mini-portions emballés individuellement, qui ne sont autres que des fromages frais ou des fromages fondus.

Selon l'invention, on propose un procédé qui a pour point de départ un fromage déjà affiné et ayant un caractère individuel précis.

On connaît déjà des procédés de fumage de fromages, tel que celui qui est décrit par exemple dans FR-A-1 466 343 ou dans "Food Science And Technology Abstracts 1980 N° 80-09-P1564" concernant de l'Edam.

On mentionnera également l'appareil décrit dans FR-A-2 655 516 pour le fumage de viandes, poissons et fromages.

Selon l'invention au contraire, on propose un procédé qui permet à la fois le fumage et le formage du fromage en une seule étape et qui consiste à disposer le fromage choisi à fumer et à former sur une claie, à l'imprégner par la fumée de fumage à une température comprise entre 15 et 45°C pendant le temps nécessaire à la déformation par fluage de la masse du fromage à travers les ouvertures de la claie, puis à ramener ce fromage à la température de conservation une fois obtenu le fumage et le formage désirés, la durée pendant laquelle le fromage formé et fumé est ramené à la température de conservation étant comprise entre 6 et 16 heures.

En fonction de la forme et du nombre d'ouvertures de la claie utilisée, on pourra réaliser d'innombrables sortes de déformations, conduisant à des fromages dont une surface au moins présentera une série de ballonnements.

Le temps nécessaire à la déformation par le fluage de la masse du fromage est généralement de l'ordre de 6 à 24 heures.

Pour éviter la dessiccation pendant la montée et le maintien en température, les fromages sont avantageusement humidifiés à l'eau salée avant mise sur claie de formage. L'hygrométrie de la chambre de fumage peut être ainsi contrôlée et maintenue à un degré hygrométrique de 40 à 85 % pour s'adapter à l'état de surface des fromages à fumer.

En variante, on retourne le fromage sur sa claie durant l'exposition à la fumée, ce qui permet d'obtenir des fromages présentant des ballonnements sur les deux faces.

En ce qui concerne le fumage proprement dit, on peut utiliser des techniques traditionnelles consistant généralement à placer les fromages de départ chacun ou collectivement sur une claie, ces claies étant posées sur des grilles-supports disposées en étagères dans une enceinte close. A la base de l'enceinte est allumé un feu, avantageusement à base de bois de chêne, de hêtre, de sapin ou mélangé selon le goût recherché. On peut utiliser aussi des techniques modernes par générateurs de fumée, cellules de fumaison, etc...

Si on veut obtenir des fromages qui, en plus d'être fumés sont aromatisés, on peut ajouter dans le feu, des aromates tels que le thym, genièvre, basilic, fenouil, laurier, individuellement ou mélangé.

Le fromage selon l'invention peut avoir, si désiré et en fonction des conditions de fumage, une croûte bicolore, due à la réserve de l'empreinte de la claie de formage. A cet endroit, la croûte peut rester claire, tandis que les surfaces exposées vont se colorer.

Parmi les nombreuses variétés de fromages qu'on peut obtenir par la mise en oeuvre du procédé selon l'invention, on signalera tout particulièrement la variété de fromage dite fromage à raclette, spécialité originaire du Valais. Les fromages en question, de forme généralement ronde, sont coupés selon un diamètre et la face ainsi dégagée est exposée à un feu de bois jusqu'à un degré de ramollissement suffisant. On emploie alors un ustensile du type couteau ou spatule pour "racler" la surface et en déposer le contenu dans une assiette.

De nos jours, on ne fait que rarement des raclettes au feu de bois et on fait appel habituellement à des fours prévus à cet effet, dits "fours à raclettes" dans lesquels les fromages sont chauffés par rayonnement infra-rouge. L'ennui, c'est que le fromage raclé a perdu tout goût fumé.

Selon l'invention, on peut par exemple préparer un fromage fumé qui, raclé au four électrique, présentera toutes les caractéristiques d'un fromage à raclette raclé au feu de bois.

L'invention sera mieux comprise en référence aux dessins annexés, donnés à titre d'exemples non limitatifs. Dans ces dessins :

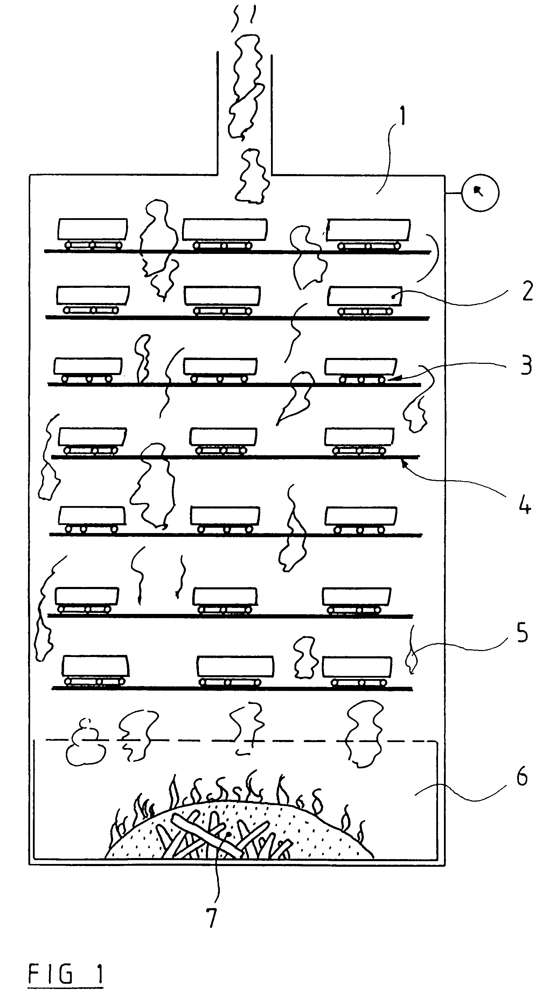

- la figure 1 est une vue intérieur d'une enceinte de fumage permettant la préparation des fromages selon l'invention ;
- la figure 2 n'est rien d'autre qu'une vue d'un fromage de départ ;
- la figure 3 est une vue d'une claie ;
- la figure 4 est une vue du fromage fumé et formé obtenue à partir du fromage de la figure 2 en utilisant la claie de la figure 3 ; et
- la figure 5 est une vue illustrant une autre forme de fromage selon l'invention.

Dans une enceinte 1, équipée d'un thermomètre non représenté permettant de suivre l'évolution de la température, sont placés des fromages de départ 2, chacun sur sa claie 3. L'ensemble est disposé en étagères ou rayonnages au moyen de grilles-supports 4. Cette enceinte est envahie par la fumée 5 provenant d'un foyer 6 dans lequel brûle un feu 7 de bois de chêne et de sciure.

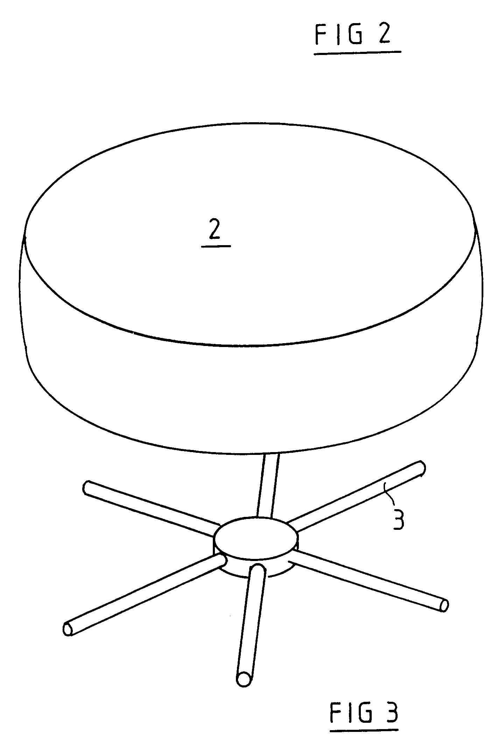

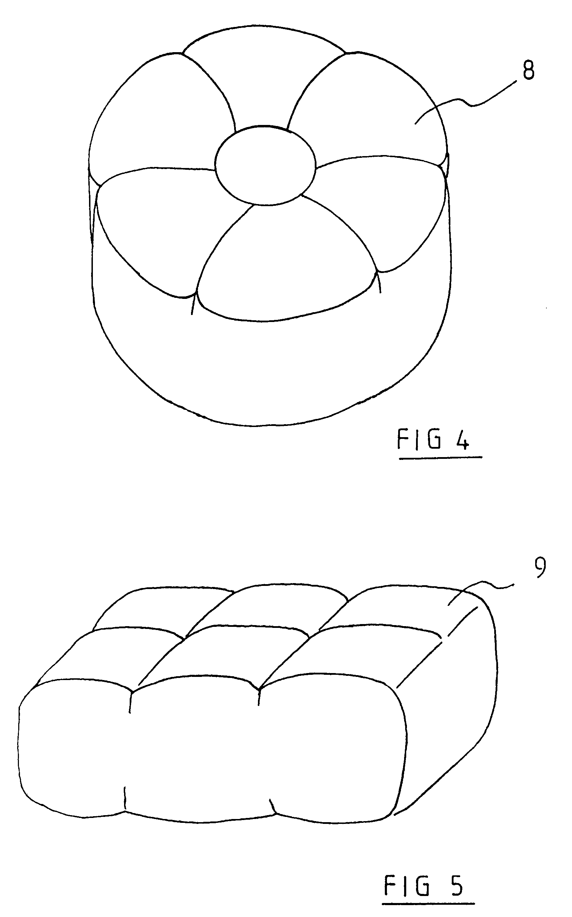

On conçoit aisément que les fromages de départ vont se fumer et, étant ramollis par la température, se déformer en même temps par fluage à travers les ouvertures des claies. Ainsi un fromage rond selon la figure 2 va fluer à travers les vides laissés par la claie 3 selon la figure 3 pour donner le fromage fumé 8 illustré à la figure 4. La claie 3 ayant un centre d'où partent des supports radiaux, le fromage au fumage n'aura pas pu se déformer à ces endroits ; le fromage fumé obtenu 8 présentera une surface ballonnée avec un centre en creux sensiblement plat et des projections radiales en creux elles aussi.

La température indiquée, comprise entre 15 et 45°C est la température optimale selon la texture du fromage assurant un fumage suffisant, sur une durée permettant un fluage sans coulage, ni trop, ni trop peu, conduisant à un fromage fumé aux formes et à l'esthétique agréables.

Si le fromage de départ est de forme sensiblement rectangulaire et que les claies sont du type à croisillons orthogonaux, le fromage obtenu 9 aura par exemple la forme illustrée à la figure 5.

En retournant le fromage sur sa claie en cours de fumage, on pourra obtenir des fromages fumés dont les deux faces sont ballonnées.

## Revendications

1. Procédé de fumage et de formage simultané d'un fromage, dans lequel on dispose le fromage (2) à fumer et à former sur une claie (3), on l'imprégne par la fumée (5) de fumage à une température comprise entre 15 et 45°C pendant le temps nécessaire à la déformation par fluage de la masse du fromage à travers les ouvertures de la claie (3), puis on le ramène à la température de conservation une fois obtenu le fumage et le formage désirés, la durée pendant laquelle le fromage formé et fumé est ramené à la température de conservation étant comprise entre 8 et 16 heures.

2. Procédé selon la revendication 1, caractérisé en ce que l'on fume le fromage dans des conditions correspondant à une hygrométrie comprise entre 40 et 85 %.

3. Procédé selon la revendication 1, caractérisé en ce qu'on retourne le fromage sur sa claie pendant l'opération de fumage.

4. Procédé selon l'une des revendications 1 à 3, caractérisé en ce que l'on utilise un fromage à raclette.

5. Procédé selon l'une des revendications 1 à 4, caractérisé en ce que la croûte du fromage obtenue est bicolore.

## Claims

1. A method for simultaneously smoke-curing and contouring cheese, in which the cheese (2) to be smoke-cured and contoured is placed on a grid-like support (3) and impregnated with curing smoke (5) at a temperature comprised between 15 and 45°C during a period of time sufficient for deformation of the mass of cheese by plastic flow through openings in the grid-like support (3), then brought to conservation temperature once the desired smoke-curing and contouring has been obtained, the duration during which the contoured and smoked cheese is brought to conservation temperature being comprised between 8 and 16 hours.

2. The method of claim 1, characterized in that the cheese is smoke-cured in conditions corresponding to a humidity comprised between 40 and 85%.

3. The method of claim 1, characterized in that the cheese is turned over on the grid-like support during the smoke-curing.

4. The method according to any one of claim 1 to 3, characterized in that a raclette cheese is used.

5. The method according to any one of claim 1 to 4, characterized in that the cheese crust obtained is two-coloured.

## Patentansprüche

1. Verfahren zum gleichzeitigen Räuchern und Formen eines Käses, bei dem der zu räuchernde und zu formende Käse (2) auf eine Horde (3) angeordnet wird, er während der Zeit, die zur Verformung durch das Kriechen der Masse des Käses durch die Öffnungen der Horde (3) erforderlich ist, bei einer Temperatur zwischen 15 und 45°C mit dem Räucherrauch (5) getränkt wird, er anschließend, sobald die gewünschte Räucherung und Formgebung erzielt ist, auf die Konservierungstemperatur gebracht wird, wobei die Zeit, während der der geformte und geräucherte Käse auf der Konservierungstemperatur gehalten wird, zwischen 8 und 16 Stunden beträgt.

2. Verfahren nach Anspruch 1, dadurch gekennzeichnet, daß der Käse unter Bedingungen geräuchert wird, die einer Luftfeuchtigkeit zwischen 40 und 85% entsprechen.

3. Verfahren nach Anspruch 1, dadurch gekennzeichnet, daß der Käse während des Räuchervorgangs auf seiner Horde gewendet wird.

4. Verfahren nach einem der Ansprüche 1 bis 3, dadurch gekennzeichnet, daß ein Raclette-Käse verwendet wird.

5. Verfahren nach einem der Ansprüche 1 bis 4, dadurch gekennzeichnet, daß die erhaltene Rinde des Käses zweifarbig ist.
